# FASCICULE DE BREVET EUROPEEN

(11) **EP 2 437 953 B1**
(45) Date de publication et mention de la délivrance du brevet: **10.09.2014**
(21) Numéro de dépôt: 10724775.1
(22) Date de dépôt: 04.06.2010
(51) Int. Cl.: B60H 1/00, B60H 1/32

(54) **ENSEMBLE COMPRENANT UN ECHANGEUR DE CHALEUR ET DES VOLETS, POMPE A CHALEUR COMPORTANT UN TEL ENSEMBLE ET PROCEDE DE PILOTAGE D'UNE TELLE POMPE A CHALEUR.**
EINHEIT MIT EINEM WÄRMETAUSCHER UND LUFTKLAPPEN, WÄRMEPUMPE UMFASSEND EINER SOLCHEN EINHEIT UND REGELUNGSVERFAHREN EINER SOLCHEN WÄRMEPUMPE
UNIT WITH A HEAT EXCHANGER AND VANES, HEAT PUMP INCLUDING SUCH A UNIT AND CONTROL METHOD FOR SUCH A HEAT PUMP

(30) Priorité: 05.06.2009 FR 0902740; 29.09.2009 FR 0904649
(43) Date de publication de la demande: 11.04.2012
(73) Titulaire: Valeo Systèmes Thermiques, 78321 Le Mesnil Saint Denis (FR)
(72) Inventeur: VACCA, Frédéric, F-78910 Behoust (FR); THUEZ, Jean-Luc, F-78112 Fourqueux (FR)
(74) Mandataire: Metz, Gaëlle
(86) Numéro de dépôt international: PCT/EP2010/057855
(87) Numéro de publication internationale: WO 2010/139796

(56) Documents cités:
- EP-A1- 1 108 575
- DE-A1-102008 005 541
- US-A- 2 807 151
- US-A- 5 341 652
- US-A1- 2003 019 232

## Description

L'invention concerne un ensemble comprenant un échangeur de chaleur et des volets, une pompe à chaleur comportant un tel ensemble et équipant un véhicule automobile en étant destinée à chauffer l'habitacle de ce véhicule et un procédé de pilotage d'une telle pompe à chaleur.

### ARRIERE PLAN DE L'INVENTION

Il est connu d'utiliser une pompe à chaleur dans un véhicule de type électrique ou hybride, c'est-à-dire dans lequel la chaleur produite par les moyens de propulsion est insuffisante pour assurer le chauffage de l'habitacle.

Elle comprend un circuit dans lequel circule un fluide caloporteur, ce circuit incluant un échangeur externe situé dans l'environnement extérieur à l'habitacle du véhicule pour réchauffer l'air contenu dans l'habitacle du véhicule en puisant la chaleur dans l'air extérieur à l'habitacle.

Lorsque la pompe à chaleur est exploitée pour chauffer l'habitacle, l'échangeur externe a une température inférieure à celle de l'air environnant, et il évapore le fluide caloporteur du circuit pour capter des calories ou de la chaleur de l'air environnant.

En cas de conditions de fonctionnement givrantes, c'est-à-dire lorsque l'échangeur externe a une température inférieure à celle de l'air extérieur voire négative et que l'air extérieur est humide, l'humidité de l'air extérieur se condense et gèle sur cet échangeur externe. Du givre se forme alors, ce qui réduit la surface d'échange et se traduit par une chute importante de l'efficacité de cet échangeur, et par là même de l'efficacité de la pompe à chaleur.

Si la situation perdure, la diminution de la surface d'échange induit une diminution supplémentaire de la température de l'échangeur, ce qui accentue encore le phénomène, conduisant rapidement à un gel complet de l'échangeur externe, ce qui le bouche, rendant la pompe à chaleur complètement inopérante.

D'une manière générale, le fait que les conditions de fonctionnement sont ou ne sont pas givrantes est conditionné par la température de l'air extérieur, par le taux d'humidité, et par la puissance thermique devant être transférée par la pompe à chaleur.

A titre d'exemple, les conditions de fonctionnement sont givrantes lorsque la température extérieure vaut 5°C, avec un taux d'humidité de 70%, si la température à atteindre dans l'habitacle vaut 20°C. Pour pallier à ce problème, le document US5341652A a pour but de proposer une solution pour réchauffer efficacement un échangeur externe. Le document US5341652A a pour objet un ensemble comprenant un échangeur externe de chaleur et des volets mobiles pilotés, pour une pompe à chaleur destinée à réchauffer l'habitacle d'un véhicule automobile, cet échangeur externe étant apte à être placé en face avant d'un véhicule automobile pour être traversé par de l'air extérieur au véhicule, les volets étant mobiles entre un état ouvert dans lequel ils sont aptes à autoriser l'air extérieur à traverser l'échangeur externe pour permettre un échange thermique entre cet air extérieur et un fluide caloporteur circulant dans l'échangeur, et un état fermé dans lequel ils sont aptes à s'opposer au passage d'air extérieur à travers l'échangeur externe

### OBJET DE L'INVENTION

Le but de l'invention est de proposer une solution pour améliorer encore l'efficacité du réchauffement de l'échangeur externe.

### RESUME DE L'INVENTION

Ce but est atteint, suivant l'invention, par une pompe à chaleur suivant les caractéristiques de la revendication 1, et par un procédé suivant les caractéristiques de la revendication 6.

Grâce à la fermeture des volets, la chaleur utilisée pour réchauffer l'échangeur n'est pas dissipée par l'air extérieur le traversant, ce qui contribue à réduire très significativement le temps nécessaire pour réchauffer cet échangeur.

L'invention concerne également un ensemble tel que défini ci-dessus, dans lequel l'échangeur de chaleur est du type réversible pour pouvoir fonctionner sélectivement en évaporateur ou en condenseur.

Suivant l'invention, la pompe à chaleur intègre un ensemble tel que défini ci-dessus, et comprend une unité de commande associée à des moyens commandés pour réchauffer ponctuellement l'échangeur externe afin de le dégivrer ou de prévenir son givrage, et pour fermer les volets mobiles lors du réchauffement de cet échangeur externe, lesdits moyens pour réchauffer ponctuellement l'échangeur externe comprenant une résistance électrique pilotée équipant la pompe à chaleur.

L'invention concerne également une pompe à chaleur intégrant un ensemble tel que défini ci-dessus, dans laquelle les moyens commandés pour réchauffer ponctuellement l'échangeur externe sont aptes à provoquer la circulation dans cet échangeur externe d'un fluide ayant une température supérieure à celle de cet échangeur externe.

L'invention concerne également une pompe à chaleur intégrant un ensemble tel que défini ci-dessus, équipée en outre de moyens annexes de chauffage de l'habitacle activables en phase de réchauffage de l'échangeur externe.

L'invention concerne également un procédé de pilotage d'une pompe à chaleur telle que décrite plus haut, procédé dans lequel on effectue un réchauffage ponctuel de l'échangeur externe afin de le dégivrer ou de prévenir son givrage, et on ferme les volets mobiles lors du réchauffage de cet échangeur externe.

Selon différentes variantes de réalisation :
- on effectue une détection de conditions génératrices de givrage et, en cas de détection desdites conditions, on régule le débit d'air extérieur à travers l'échangeur externe en fixant une position intermédiaire des volets, en mode pompe à chaleur ;
- en cas de détection desdites conditions de givrage, on effectue en outre une surveillance du givrage et on déclenche le réchauffage ponctuel de l'échangeur externe en fonction des résultats de cette surveillance ;
- en cas de détection desdites conditions de givrage, on définit un intervalle de temps correspondant à une quantité estimée de givrage et on déclenche le réchauffage au bout dudit intervalle de temps ;
- on définit ledit intervalle de temps en effectuant les opérations suivantes :
   - on mesure la température du fluide caloporteur et la température ambiante,
   - on associe les températures relevées au débit d'air ;
- la surveillance du givrage est réalisée par la prise en compte du degré réel de givrage ;
- le réchauffage ponctuel de l'échangeur externe est obtenu en faisant fonctionner la pompe à chaleur en mode climatisation pour que des calories prélevées par le fluide caloporteur au niveau d'un échangeur dit interne de ladite pompe à chaleur soient transférées par ledit fluide caloporteur vers l'échangeur externe, afin que le fluide caloporteur traversant l'échangeur externe ait une température supérieure à celle de cet échangeur externe.

### BREVE DESCRIPTION DES FIGURES

La figure 1 est une représentation schématique de la pompe à chaleur selon l'invention lorsqu'elle chauffe l'habitacle ;
La figure 2 est une représentation schématique de la pompe à chaleur selon l'invention en phase de réchauffage de son échangeur externe ;
La figure 3 est un graphe montrant l'évolution de la température de l'échangeur externe en cas de conditions givrantes.

### DESCRIPTION DETAILLEE DE L'INVENTION

L'idée à la base de l'invention est de réduire ou annuler le flux d'air extérieur traversant l'échangeur externe durant la phase de réchauffage, afin de diminuer significativement la durée de cette phase. L'invention permet ainsi d'isoler thermiquement l'échangeur externe de l'environnement extérieur afin d'accélérer son réchauffement, quelle que soit la manière dont ce réchauffement est assuré.

Suivant l'invention, ce réchauffement est assuré en réchauffant le fluide caloporteur traversant cet échangeur, ce qui a pour effet de réchauffer l'échangeur traversé par ce fluide, ceci pouvant être obtenu en faisant simplement fonctionner la pompe à chaleur en mode de climatisation.

L'invention peut être utilisée soit pour dégivrer "réellement" l'échangeur externe, soit pour le réchauffer temporairement de manière préventive afin d'éviter la formation de givre lorsque les conditions rendent une telle situation imminente.

Dans l'exemple des figures, le réchauffement de l'échangeur externe est assuré en inversant temporairement le fonctionnement de la pompe à chaleur, c'est-à-dire en la faisant fonctionner comme si elle servait à climatiser l'habitacle.

Suivant l'invention, il est mis en oeuvre des résistances électriques, au niveau de l'échangeur externe ou bien en amont de celui-ci dans le circuit de la pompe à chaleur pour réchauffer le fluide caloporteur afin de réchauffer l'échangeur externe traversé par ce fluide.

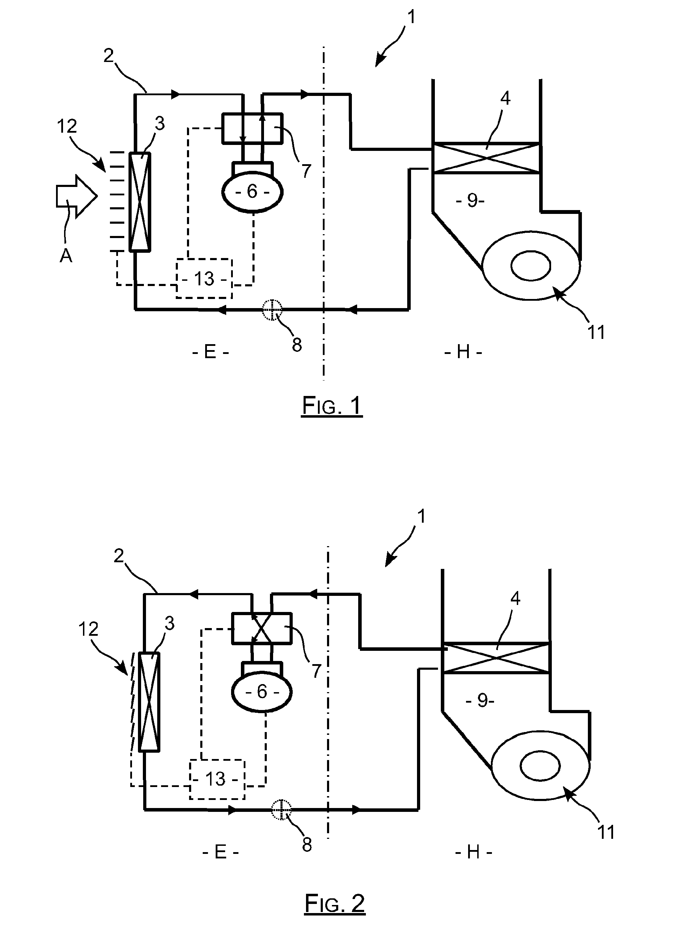

Comme représenté dans la figure 1, la pompe à chaleur selon l'invention, repérée par 1, comprend un circuit 2 de circulation d'un fluide caloporteur s'étendant entre d'une part l'habitacle du véhicule, repéré par H, et plus particulièrement du boîtier de climatisation, et d'autre part l'environnement extérieur à l'habitacle, repéré par E.

Le boîtier de climatisation qui est repéré par 9 dans les figures est un ensemble de composants, situé généralement dans l'habitacle derrière la planche de bord, et comportant typiquement un radiateur de chauffage pour chauffer l'habitacle et un évaporateur pour le refroidir. Il comporte également un ventilateur pour forcer la circulation d'air dans ce radiateur et/ou dans cet évaporateur.

Ce circuit 2 comprend un échangeur dit externe 3 situé dans l'environnement externe E, typiquement au niveau de la face avant du véhicule, pour prélever des calories sous forme de la chaleur à l'air extérieur. Il comprend un autre échangeur dit interne 4, situé au niveau de l'habitacle et généralement dans le boîtier de climatisation pour réchauffer l'air de l'habitacle en cédant les calories ou la chaleur prélevée par le fluide caloporteur au niveau de l'échangeur externe 3 à de l'air traversant l'exhangeur interne 4.

L'échangeur externe 3 est du type des échangeurs externes d'un circuit de climatisation, c'est-à-dire qu'il est conçu et dimensionné pour supporter un fluide caloporteur pressurisé. A titre d'ordre de grandeur, lorsque le fluide caloporteur est du type R134a, il est pressurisé sous une pression de 10 à 30 bar, et lorsque ce fluide est du C02, il est pressurisé à une pression comprise entre 80 et 150 bar.

En ce qui concerne l'échangeur interne 4, il est par exemple placé dans le boîtier 9 incluant éventuellement un ventilateur 11, pour être traversé par de l'air afin de réchauffer l'habitacle, cet air pouvant être un mélange d'air provenant de l'habitacle et d'air provenant de l'extérieur de l'habitacle.

Le circuit 2 comprend encore un compresseur 6 associé à une vanne à quatre voies 7, et un organe de régulation 8 formant détendeur. Le compresseur 6 est relié à une sortie de l'échangeur externe 3 et à une entrée de l'échangeur interne 4, par l'intermédiaire de la vanne à quatre voies 7. L'organe de régulation 8 formant détendeur est interposé entre la sortie de l'échangeur interne 4 et une entrée de l'échangeur externe 3.

Lorsque la pompe à chaleur est exploitée pour chauffer l'air de l'habitacle et dans le cas d'un fluide caloporteur de type R134a, le compresseur comprime en l'échauffant le gaz contenu dans le circuit 2 qui est issu de l'échangeur externe 3 pour qu'il libère de la chaleur au niveau de l'échangeur interne 4 en s'y condensant. Le fluide caloporteur qui est alors en phase liquide sous haute pression se détend ensuite à travers l'organe de régulation 8, avant de passer dans l'échangeur externe 3 pour s'y évaporer tout en captant des calories ou de la chaleur de l'air extérieur A traversant cet échangeur.

Comme visible en figure 1, lorsque la pompe est exploitée pour chauffer l'habitacle, le fluide caloporteur circule dans la boucle fermée que constitue le circuit 2, en "tournant" dans le sens indirect sur les figures.

Dans la pompe à chaleur selon l'invention, on a prévu un ensemble de volets mobiles repérés par 12, situés en amont de l'échangeur externe 3 vis-à-vis du flux d'air A, et qui sont mobiles entre une position ouverte comme dans la figure 1 pour laisser passer l'air A à travers l'échangeur, et une position fermée comme dans la figure 2 dans laquelle ils s'opposent au passage d'air à travers cet échangeur.

Par ailleurs, une unité de régulation ou de commande repérée par 13 est prévue pour piloter au moins ces volets 12, ainsi que le compresseur 6 et la vanne à quatre voies 7, en particulier en phase de réchauffage de l'échangeur.

Pour réchauffer l'échangeur externe 3 et/ou le fluide caloporteur qui le traverse, l'unité de commande 13 pilote la vanne à quatre voies 7 de manière à inverser le sens de circulation du fluide dans le circuit 2, et elle pilote par ailleurs les volets 12 pour les fermer de manière à isoler thermiquement l'échangeur externe 3 du flux d'air extérieur A.

Dans ce mode de fonctionnement qui correspond à la figure 2, la pompe à chaleur est exploitée comme un circuit de climatisation « classique » tendant à abaisser la température dans l'habitacle, ce qui correspond à un cycle thermodynamique dans lequel le fluide caloporteur se réchauffe, ce qui a pour effet de réchauffer l'échangeur externe 3 traversé par ce fluide.

Plus particulièrement, dans cette situation, le fluide caloporteur est comprimé par le compresseur 6 dans lequel il s'échauffe avant d'atteindre l'échangeur externe 3 dans lequel il se condense ou se liquéfie en le réchauffant. Ce liquide haute pression se détend ensuite à travers l'organe de régulation 8 formant détendeur, et atteint l'échangeur interne 4 pour s'y évaporer afin de puiser la chaleur dans l'air traversant cet échangeur 4.

Ainsi, dans ce mode de fonctionnement, l'échangeur interne 4 fonctionne en évaporateur, de sorte qu'il tend à refroidir l'air qui circule dans l'habitacle. Afin de contrecarrer cet effet, on peut prévoir des moyens annexes pour réchauffer l'habitacle. Ces moyens annexes peuvent être des résistances thermiques qui sont alors alimentées électriquement pour réchauffer l'air ayant traversé cet échangeur interne 4 avant qu'il n'atteigne l'habitacle.

Comme on le voit, le fait de fermer les volets 12 pendant que l'échangeur externe 3 est réchauffé en étant traversé par le fluide caloporteur chaud qui s'y condense permet d'isoler cet échangeur de l'air extérieur froid, de manière à réduire le temps de réchauffage effectif de l'échangeur externe 3. Autrement dit, la chaleur apportée par le fluide se condensant dans l'échangeur 3 est captée essentiellement par la structure de cet échangeur, et elle ne peut pas être dispersée dans l'air environnant tant que les volets 12 sont fermés.

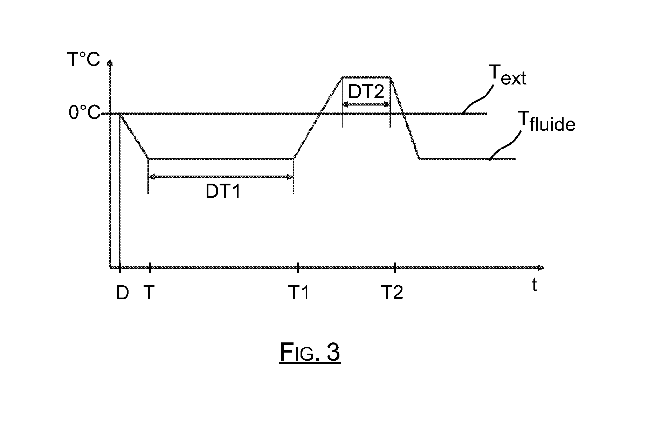

D'une manière générale, le cycle de réchauffage qui est représenté schématiquement dans le graphe de la figure 3 est déclenché par l'unité de commande 13 pour que la température de surface de l'échangeur devienne positive, ce qui peut être détecté par différents capteurs équipant l'installation et/ou la pompe.

Au départ, lorsque la pompe à chaleur est activée, ce qui correspond à l'instant repérée par D, la température extérieure est la même que celle du fluide caloporteur, à savoir 0°C dans l'exemple de la figure 3. Le débit d'air dans l'échangeur externe 3 est alors ajusté continuellement sur la base de la consigne de température à atteindre dans l'habitacle, et de la vitesse du véhicule qui conditionne ce débit d'air.

Ce débit est modulé en pilotant un système de ventilation non représenté et/ou l'ouverture des volets 12 qui peuvent être prévus pour occuper toute position intermédiaire entre la position d'ouverture maximale et la position de fermeture maximale.

Dans cette situation, l'unité de commande 13 vise à obtenir un débit d'air donnant la puissance thermique nécessaire pour atteindre dans un temps raisonnable la température de consigne dans l'habitacle, tout en minimisant ce débit afin de limiter la quantité d'eau véhiculée par ce débit d'air afin de limiter autant que faire se peut le phénomène de givrage.

Après écoulement d'une première durée notée T, le système se stabilise, avec une température de fluide caloporteur qui devient constante. Si les conditions de température extérieure et d'évaporation sont constantes pendant un temps T1 = T+DT1, un cycle de réchauffage est démarré par la fermeture des volets 12 afin d'obtenir une température du fluide caloporteur du circuit 2 supérieure à la température de l'air A, ce qui entraîne une température de surface de l'échangeur externe supérieure à la température de l'air.

Ainsi, le démarrage du cycle de réchauffage peut être déclenché lorsqu'un certain temps de fonctionnement de la pompe à chaleur s'est écoulé alors que les conditions de formation du givre sont réunies, ces conditions pouvant être identifiées par exemple à partir de mesures de la températures extérieure et/ou de la température du fluide caloporteur circulant dans la pompe à chaleur.

Autrement dit, la mesure de la température ambiante du circuit et/ou de l'air extérieur permet d'initialiser la commande en fermeture des volets pilotés, en déterminant par exemple une valeur d'intervalle de temps DT1 dépendant de ces mesures.

Ce cycle peut aussi être déclenché par la prise en compte d'une image réelle du degré de givrage, via une caméra ou une fibre optique, et/ou par la mesure d'un écart de pression entre l'entrée et la sortie de l'échangeur externe 3, qui est représentatif de son degré de givrage.

Comme visible dans le graphe de la figure 3, le cycle de réchauffage comprend une première phase durant laquelle la température du fluide caloporteur augmente, puis une seconde phase dans laquelle cette température est stabilisée à une valeur positive pendant une durée DT2. La fin du cycle de réchauffage qui est repérée par l'instant T2 correspond par exemple à l'écoulement d'une durée DT2 ayant une valeur prédéterminée.

Lorsque le cycle de réchauffage est terminé, l'unité de commande 13 pilote à nouveau la vanne quatre voies 7 pour faire fonctionner la pompe à chaleur pour qu'elle chauffe l'habitacle, tout en ouvrant les volets 12. Il s'ensuit à nouveau une baisse graduelle de la température du fluide caloporteur, un nouveau cycle de réchauffage étant par exemple déclenché après écoulement d'un nouvel intervalle de temps DT1 pendant lequel la température du fluide aura pris une valeur constante négative.

Ainsi, la régulation de la position des volets qui intervient durant les cycles de réchauffage, peut également être assurée continuellement, en prenant en compte la température extérieure, avec éventuellement le taux d'humidité, la vitesse du véhicule qui conditionne la vitesse du flux d'air traversant l'échangeur externe, ainsi que la valeur de la consigne de température à atteindre dans l'habitacle. Cet asservissement prend avantageusement aussi en compte la pression basse et la pression haute dans le circuit 2, la vitesse du compresseur 6, la vitesse d'un ventilateur situé en vis-à-vis de l'échangeur externe 3, ainsi qu'une horloge pour intégrer l'évolution de ces paramètres dans le temps.

## Revendications

1. Pompe à chaleur (1) intégrant un ensemble comprenant un échangeur de chaleur (3) externe et des volets mobiles pilotés (12), destinée à réchauffer l'habitacle d'un véhicule automobile, cet échangeur externe (3) étant apte à être placé en face avant d'un véhicule automobile pour être traversé par de l'air extérieur (A) au véhicule, les volets (12) étant mobiles entre un état ouvert dans lequel ils sont aptes à autoriser l'air extérieur (A) à traverser l'échangeur externe (3) pour permettre un échange thermique entre cet air extérieur (A) et un fluide caloporteur circulant dans l'échangeur externe (3), et un état fermé dans lequel ils sont aptes à s'opposer au passage de l'air extérieur (A) à travers l'échangeur externe (3), l'ensemble comprenant en outre des moyens commandés pouvant réchauffer le fluide caloporteur circulant dans l'échangeur externe (3), la pompe à chaleur (1) comprenant une unité de commande (13) associée à des moyens commandés pour réchauffer ponctuellement l'échangeur externe (3) afin de le dégivrer ou de prévenir son givrage, et pour fermer les volets mobiles (12) lors du réchauffement de cet échangeur externe (3), ladite pompe à chaleur étant **caractérisée en ce que** lesdits moyens pour réchauffer ponctuellement l'échangeur externe (3) comprennent une résistance électrique pilotée, ladite résistance électrique étant mise en oeuvre au niveau de l'échangeur externe ou en amont de celui-ci dans le circuit de la pompe à chaleur.

2. Pompe à chaleur (1) selon la revendication 1, dans lequel l'échangeur externe (3) est du type réversible pour pouvoir fonctionner sélectivement en évaporateur ou en condenseur.

3. Pompe à chaleur selon la revendication 1 ou 2, dans laquelle les moyens commandés pour réchauffer ponctuellement l'échangeur externe (3) sont aptes à provoquer la circulation dans cet échangeur externe (3) du fluide caloporteur ayant une température supérieure à celle de cet échangeur externe (3).

4. Pompe à chaleur selon l'une des revendications 1 à 3, équipée en outre de moyens annexes de chauffage de l'habitacle activables en phase de réchauffage de l'échangeur externe (3).

5. Pompe à chaleur selon la revendication 4, dans laquelle lesdits moyens annexes de chauffage de l'habitacle sont des résistances électriques qui sont aptes à réchauffer l'air ayant traversé l'échangeur interne (4).

6. Procédé de pilotage d'une pompe à chaleur conforme à l'une quelconque des revendications 1 à 5, cet échangeur externe (3) étant apte à être placé en face avant d'un véhicule automobile pour être traversé par de l'air extérieur (A) au véhicule, les volets (12) étant mobiles entre un état ouvert dans lequel ils sont aptes à autoriser l'air extérieur (A) à traverser l'échangeur externe (3) pour permettre un échange thermique entre cet air extérieur (A) et un fluide caloporteur circulant dans l'échangeur externe (3), et un état fermé dans lequel ils sont aptes à s'opposer au passage de l'air extérieur (A) à travers l'échangeur externe (3), procédé dans lequel on effectue un réchauffage ponctuel de l'échangeur externe (3) par lesdits moyens commandés afin de le dégivrer ou de prévenir son givrage, et on ferme les volets mobiles (12) lors du réchauffage de cet échangeur externe (3).

7. Procédé selon la revendication 6 dans lequel on effectue une détection de conditions génératrices de givrage et, en cas de détection desdites conditions, on régule le débit d'air extérieur à travers l'échangeur externe (3) en fixant une position intermédiaire des volets (12), en mode pompe à chaleur.

8. Procédé selon la revendication 7 dans lequel, en cas de détection desdites conditions de givrage, on effectue en outre une surveillance du givrage et on déclenche le réchauffage ponctuel de l'échangeur externe (3) en fonction des résultats de cette surveillance.

9. Procédé selon la revendication 8 dans lequel, en cas de détection desdites conditions de givrage, on définit un intervalle de temps correspondant à un niveau estimé de givrage et on déclenche le réchauffage au bout dudit intervalle de temps.

10. Procédé selon la revendication 9 dans lequel on définit ledit intervalle de temps en effectuant les opérations suivantes :
- on mesure la température du fluide caloporteur et la température ambiante,
- on associe les températures relevées au débit d'air.

11. Procédé selon la revendication 8 dans lequel la surveillance du givrage est réalisée par la prise en compte du degré réel de givrage.

12. Procédé selon l'une des revendications 6 à 11, dans lequel le réchauffage ponctuel de l'échangeur externe (3) est obtenu en faisant fonctionner la pompe à chaleur (1) en mode climatisation pour que des calories prélevées par le fluide caloporteur au niveau d'un échangeur dit interne (4) de ladite pompe à chaleur soient transférées par ledit fluide caloporteur vers l'échangeur externe (3), afin que le fluide caloporteur traversant l'échangeur externe (3) ait une température supérieure à celle de cet échangeur externe (3).

## Patentansprüche

1. Wärmepumpe (1), die eine Baugruppe enthält, die einen externen Wärmetauscher (3) und vorgesteuerte bewegliche Klappen (12) umfasst und dazu bestimmt ist, den Fahrgastraum eines Kraftfahrzeugs zu erwärmen, wobei dieser externe Tauscher (3) dafür ausgelegt ist, an der Vorderseite eines Kraftfahrzeugs angeordnet zu werden, um von der Außenluft (A) des Fahrzeugs durchquert zu werden, wobei die Klappen (12) zwischen einem geöffneten Zustand, in dem sie zulassen können, dass die Außenluft (A) den externen Tauscher (3) durchquert, um einen Wärmeaustausch zwischen dieser Außenluft (A) und einem Wärmeaustauschfluid, das in dem externen Tauscher (3) zirkuliert, zu ermöglichen, und einem geschlossenen Zustand, in dem sie dafür ausgelegt sind, sich dem Durchgang der Außenluft (A) durch den externen Tauscher (3) zu widersetzen, beweglich sind, wobei die Gesamtheit außerdem gesteuerte Mittel umfasst, um das in dem externen Tauscher (3) zirkulierende Wärmeaustauschfluid zu erwärmen, wobei die Wärmepumpe (1) eine Steuereinheit (13) umfasst, die gesteuerten Mitteln zugeordnet sind, um den externen Tauscher (3) punktuell zu erwärmen, um ihn zu entfrosten oder um sein Einfrieren zu verhindern, und um die beweglichen Klappen (12) beim Erwärmen dieses externen Tauschers (3) zu schließen, wobei die Wärmepumpe **dadurch gekennzeichnet ist, dass** die Mittel zum punktuellen Erwärmen des externen Tauschers (3) einen vorgesteuerten elektrischen Widerstand umfassen, wobei der elektrische Widerstand auf Höhe des externen Tauschers oder stromaufseitig hiervon in dem Kreis der Wärmepumpe betrieben wird.

2. Wärmepumpe (1) nach Anspruch 1, wobei der externe Tauscher (3) vom reversiblen Typ ist, um wahlweise als Verdampfer oder als Kondensator zu arbeiten.

3. Wärmepumpe nach Anspruch 1 oder 2, wobei die gesteuerten Mittel zum punktuellen Erwärmen des externen Tauschers (3) die Zirkulation in diesem externen Tauscher (3) des Wärmeaustauschfluids, das eine Temperatur besitzt, die höher als jene dieses externen Tauschers (3) ist, hervorrufen können.

4. Wärmepumpe nach einem der Ansprüche 1 bis 3, die außerdem mit Zusatzmitteln zum Heizen des Fahrgastraums ausgerüstet ist, die in der Phase der Erwärmung des externen Tauschers (3) aktivierbar sind.

5. Wärmepumpe nach Anspruch 4, wobei die Zusatzmittel zum Erwärmen des Fahrgastraums elektrische Widerstände sind, die die Luft, die den internen Tauscher (4) durchquert hat, erwärmen können.

6. Verfahren zum Vorsteuern einer Wärmepumpe nach einem der Ansprüche 1 bis 5, wobei dieser externe Tauscher (3) dafür ausgelegt ist, an der Vorderseite eines Kraftfahrzeugs angeordnet zu werden, um von der Außenluft (A) des Fahrzeugs durchquert zu werden, wobei die Klappen (12) zwischen einem geöffneten Zustand, in dem sie zulassen können, dass die Außenluft (A) den externen Tauscher (3) durchquert, um einen Wärmeaustausch zwischen dieser Außenluft (A) und einem Wärmeaustauschfluid, das in dem externen Tauscher (3) zirkuliert, zu ermöglichen, und einem geschlossenen Zustand, in dem sie sich dem Durchgang der Außenluft (A) durch den externen Tauscher (3) widersetzen können, beweglich sind, wobei in dem Verfahren ein punktuelles Erwärmen des externen Tauschers (3) durch die gesteuerten Mittel erfolgt, um ihn zu entfrosten oder um sein Einfrieren zu verhindern, und die beweglichen Klappen (12) während des Erwärmens dieses externen Tauschers (3) geschlossen werden.

7. Verfahren nach Anspruch 6, wobei eine Detektion von Bedingungen, die ein Einfrieren hervorrufen, erfolgt und im Fall einer Detektion solcher Bedingungen der Durchsatz von Außenluft durch den externen Tauscher (3) reguliert wird, indem eine Zwischenposition der Klappen (12) in der Wärmepumpenbetriebsart festgelegt wird.

8. Verfahren nach Anspruch 7, wobei im Fall einer Detektion solcher Einfrierbedingungen außerdem eine Überwachung des Einfrierens erfolgt und das punktuelle Erwärmen des externen Tauschers (3) als Funktion der Ergebnisse dieser Überwachung ausgelöst wird.

9. Verfahren nach Anspruch 8, wobei im Fall einer Detektion solcher Einfrierbedingungen ein Zeitintervall, das einem geschätzten Einfrierniveau entspricht, definiert wird und das Erwärmen am Ende dieses Zeitintervalls ausgelöst wird.

10. Verfahren nach Anspruch 9, wobei das Zeitintervall durch Ausführen der folgenden Operationen definiert wird:
- Messen der Temperatur des Wärmeaustauschfluids und der Umgebungstemperatur,
- Zuordnen der abgetasteten Temperatur zu dem Luftdurchsatz.

11. Verfahren nach Anspruch 8, wobei das Überwachen des Einfrierens durch Berücksichtigen des wirklichen Einfriergrades verwirklicht wird.

12. Verfahren nach einem der Ansprüche 6 bis 11, wobei das punktuelle Erwärmen des externen Tauschers (3) erhalten wird, indem die Wärmepumpe (1) im Klimatisierungsbetrieb betrieben wird, damit die von dem Wärmeaustauschfluid auf Höhe eines internen Tauschers (4) der Wärmepumpe abgegriffene Wärme durch das Wärmeaustauschfluid zu dem externen Tauscher (3) übertragen wird, damit das Wärmeaustauschfluid, das den externen Tauscher (3) durchquert, eine Temperatur hat, die höher als jene des externen Tauschers (3) ist.

## Claims

1. Heat pump (1) incorporating an assembly comprising an external heat exchanger (3) and controlled movable flaps (12), which heat pump is intended to heat the interior of a motor vehicle, this external exchanger (3) being able to be positioned on the front face of a motor vehicle so that air (A) external to the vehicle can pass through it, the flaps (12) being movable between an open state in which they are able to allow the external air (A) to pass through the external exchanger (3) to allow an exchange of heat between this external air (A) and a heat-transfer fluid circulating through the external exchanger (3), and a closed state in which they are able to oppose the passage of external air (A) through the external exchanger (3), the assembly further comprising controlled means able to heat up the heat-transfer fluid circulating through the external exchanger (3), the heat pump (1) comprising a control unit (13) associated with controlled means for locally heating the external exchanger (3) in order to deice it or prevent it from icing, and for closing the movable flaps (12) during the heating-up of this external exchanger (3), the said heat pump being **characterized in that** the said means for locally heating the external exchanger (3) comprise a controlled resistive electric element, the said resistive electric element being employed at the external exchanger or upstream thereof in the heat pump circuit.

2. Heat pump (1) according to Claim 1, in which the external exchanger (3) is of the reversible type so that it can selectively operate as an evaporator or as a condenser.

3. Heat pump according to Claim 1 or 2, in which the controlled means for locally heating up the external exchanger (3) are able to cause the heat-transfer fluid to circulate through this external exchanger (3) at a temperature higher than that of this external exchanger (3).

4. Heat pump according to one of Claims 1 to 3, further equipped with auxiliary cabin-interior heating means that can be activated during the phase in which the external exchanger (3) is being heated up.

5. Heat pump according to Claim 4, in which the said auxiliary cabin-interior heating means are resistive electric elements which are able to heat up the air that has passed through the internal exchanger (4).

6. Method for controlling a heat pump according to any one of Claims 1 to 5, this external exchanger (3) being able to be positioned on the front face of a motor vehicle so that air (A) external to the vehicle can pass through it, the flaps (12) being movable between an open state in which they are able to allow the external air (A) to pass through the external exchanger (3) to allow an exchange of heat between this external air (A) and a heat-transfer fluid circulating through the external exchanger (3), and a closed state in which they are able to oppose the passage of external air (A) through the external exchanger (3), in which method the external exchanger (3) is locally heated up by the said controlled means in order to deice it or prevent it from icing, and the movable flaps (12) are closed while this external exchanger (3) is being heated up.

7. Method according to Claim 6, in which conditions liable to generate icing are detected, and if the said conditions are detected, the rate of flow of external air through the external exchanger (3) is regulated by fixing an intermediate position for the flaps (12), in heat pump mode.

8. Method according to Claim 7, in which, if the said icing conditions are detected, the icing is furthermore monitored and localised heating of the external exchanger (3) is triggered on the basis of the results of this monitoring.

9. Method according to Claim 8, in which, if the said icing conditions are detected, a period of time corresponding to an estimated level of icing is defined and the heating is triggered at the end of the said time period.

10. Method according to Claim 9, in which the said time period is defined by carrying out the following operations:
- the temperatures of the heat-transfer fluid and the ambient temperature are measured,
- the recorded temperatures are associated with the air flow rate.

11. Method according to Claim 8, in which the monitoring of the icing is performed by taking the actual degree of icing into consideration.

12. Method according to one of Claims 6 to 11, in which the localised heating of the external exchanger (3) is obtained by operating the heat pump (1) in air-conditioning mode so that the heat energy picked up by the heat-transfer fluid at what is referred to as an internal exchanger (4) of the said heat pump is transferred by the said heat-transfer fluid to the external exchanger (3) so that heat-transfer fluid passing through the external exchanger (3) has a temperature higher than that of this external exchanger (3).
